# EUROPEAN PATENT SPECIFICATION

(11) **EP 4 286 277 B1**
(45) Date of publication and mention of the grant of the patent: **13.08.2025**
(21) Application number: 23175812.9
(22) Date of filing: 26.05.2023
(51) Int. Cl.: B64D 11/06, B60N 2/02

(54) **ECONOMY CLASS PASSENGER SEAT ROW WITH BED MODE**
FAHRGASTSITZREIHE DER ECONOMY-KLASSE MIT BETTMODUS
RANGÉE DE SIÈGES PASSAGERS DE CLASSE ÉCONOMIQUE AVEC MODE LIT

(30) Priority: 01.06.2022 IN 202241031495; 25.07.2022 US 202217872874
(43) Date of publication of application: 06.12.2023
(73) Proprietor: B/E Aerospace, Inc., Winston-Salem, NC 27105 (US)
(72) Inventor: KODATI, Sambasiva Rao, Kaikalur (IN); GUDLA, Chandra Sekhar, 500090 Hyderabad, TS (IN)
(74) Representative: Dehns

(56) References cited:
- EP-B1- 3 078 594
- JP-U- S5 527 435
- US-A1- 2014 265 513

## Description

### TECHNICAL FIELD AND BACKGROUND

The present disclosure relates generally to aircraft passenger seats, and more particularly to an economy class passenger seat row configured to achieve an in-flight bed mode.

Passenger aircraft typically include different seating classes. Economy classes are characterized by rows of attached seats and a seat pitch that allows for a minimal amount of backrest recline. Premium classes are characterized by separate seats and a greater seat pitch that allows for maximum seat adjustability. For instance, some super premium seats are configured to achieve a horizontal bed during flight.

In the case of long-haul flights, a passenger may desire to purchase an entire economy class seat row for privacy and comfort. In other cases, when a flight is not full, passengers may redistribute throughout the cabin to maximize spacing between passengers. In either case, economy class passenger seat rows do not include a provision to sleep.

Therefore, what is needed is a passenger seat row configured with an in-flight bed mode. US2014/265513A1 discloses an aircraft seat comprising a seat pan and a backrest. The backrest includes a movable element which is detachable from the backrest and attachable to the seat pan to extend the seat pan surface in order to form an extended bed-like surface. EP3078594 B1 discloses a vehicle seat comprising a frame, a backrest, coupled to the frame, and a seating unit. The seating unit comprises a seating base that is movable between a withdrawn position, wherein a side of the seating base is substantially adjacent to the backrest and an extended position, wherein the seating base is positioned at a distance from the backrest so as to allow the passenger to rest their legs on the seating element.

### BRIEF SUMMARY

Broadly speaking, the present disclosure provides economy class passenger seat rows configured with an in-flight bed mode.

To achieve the foregoing and other advantages, the inventive aspects disclosed herein are directed to a passenger seat row according to claim 1. The passenger seat row includes at least two passenger seats attached to a common frame. Each passenger seat includes a backrest forming a recess on a front of the backrest, a cushion removably disposed in the recess, and a seat pan including a fixed frame and a moving frame movably coupled to the fixed frame. In a taxi, takeoff and landing (TTOL) mode of the passenger seat row the moving frame of each of the at least two passenger seats is retracted relative to its respective fixed frame and the cushion is disposed in the recess, and in a bed mode of the passenger seat row the moving frame of each of the at least two passenger seats is extended relative to its fixed frame and the cushion is positioned atop its respective fixed frame.

In some embodiments, a length dimension of the cushion is substantially equal to an amount of travel of the moving frame relative to the fixed frame.

In some embodiments, the moving frame translates relative to the fixed frame as the moving frame extends and retracts.

The fixed frame comprises spaced frame members interconnected by spaced beams and a foraminous plate attached atop the spaced beams, at least one of the spaced frame members defining a rack on an inboard side thereof, and the moving frame comprises spaced frame members interconnected by spaced beams and a foraminous plate attached atop the spaced beams, each of the spaced frame members defining an elongate slot. A forward beam of the spaced beams of the fixed frame is disposed in the elongate slot of each of the spaced frame members of the moving frame for guiding movement of the moving frame relative to the fixed frame.

In some embodiments, the seat row further includes a locking mechanism associated with each of the at least two passenger seats for locking relative motion between the moving frame and the fixed frame.

In some embodiments, the locking mechanism includes a lock configured to interact with the rack on at least one of the frame members of the fixed frame to lock a position of the moving frame relative to the fixed frame, a lever positioned on the moving frame, and a Bowden cable coupled to each of the lock and the lever. In use, pulling the lever causes an inner cable of the Bowden cable to disengage the lock from the rack to permit movement of the moving frame relative to the fixed frame.

In some embodiments, the seat row further includes hook and loop fasteners positioned in the recess, on a bottom side of the cushion, and atop the foraminous plate of at least one of the fixed frame and the moving frame, wherein in use, the hook and loop fasteners secure the cushion in the recess and atop at least one of the fixed frame and the moving frame.

In some embodiments, when in the TTOL mode the moving frame is positioned above the common frame and when in the bed mode the moving frame is positioned forward of the common frame.

In some embodiments, the common frame includes spaced beam tubes supporting the fixed frame of the at least two passenger seats, spreaders forming legs for attachment to a floor, and at least one armrest.

In some embodiments, the passenger seat row includes at least three passenger seats.

In some embodiments, the lever is positioned under a forward end of the moving frame.

The inventive aspects disclosed herein are further directed to an aircraft passenger seat including a frame, a backrest attached to the frame and forming a recess on a front of the backrest, a cushion removably disposed in the recess, and a seat pan attached to the frame and including a fixed frame and a moving frame movably coupled to the fixed frame. In a TTOL mode of the aircraft passenger seat the moving frame is retracted relative to the fixed frame and the cushion is disposed in the recess, and in a bed mode of the aircraft passenger seat the moving frame is extended relative to the fixed frame and the cushion is positioned atop the fixed frame.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated, and some features may be omitted or may be represented schematically in the interest of clarity. Like reference numbers in the drawings may represent and refer to the same or similar element, feature, or function. In the drawings:
FIG. 1 shows an isometric view of a passenger seat row according to the present disclosure and in a taxi, takeoff and landing (TTOL) mode;
FIG. 2 shows the passenger seat row of FIG. 1 in a partially converted mode;
FIG. 3 shows the passenger seat row of FIG. 1 in an in-flight bed mode;
FIG. 4 shows a detailed view of seat pan attachment to a frame;
FIG. 5 shows a side view of an individual passenger seat in bed mode and the location of the bed cushion in the backrest;
FIG. 6 shows a side elevation view of a passenger seat converted from TTOL mode to bed mode;
FIGS. 7A and 7B show the seat pan in TTOL mode and bed mode, respectively;
FIGS. 8A and 8B show the seat pan in TTOL mode and bed mode, respectively, and with the cushions removed for clarity;
FIG. 9A shows the fixed frame of the seat pan;
FIG. 9B shows an exploded view of the fixed frame of the seat pan;
FIG. 9C shows an inside view of a frame member of the fixed frame of the seat pan;
FIG. 9D shows a toother rack of the frame member of FIG. 9C;
FIG. 10A shows a moving frame of the seat pan;
FIG. 10B shows an exploded view of the moving frame of the seat pan; and
FIG. 11 shows an isometric view of a seat row including a single lever to for actuating seat pan translation.

### DETAILED DESCRIPTION

Broadly speaking, the present disclosure provides embodiments of passenger seats and passenger seat rows configured to adjust between an upright sitting mode and a bed mode. When implemented in an aircraft, the upright sitting mode may correspond to a taxi, takeoff and landing mode in which the seat pan is retracted and the backrest is fully upright or reclined. When the seat embodiments are equipped with backrest recline, the seat pan motions described herein may be independent of the backrest recline mechanism and other mechanisms of the seat. The passenger seat row includes at least two, and preferably at least three laterally adjacent passenger seats to provide an adequate bed length.

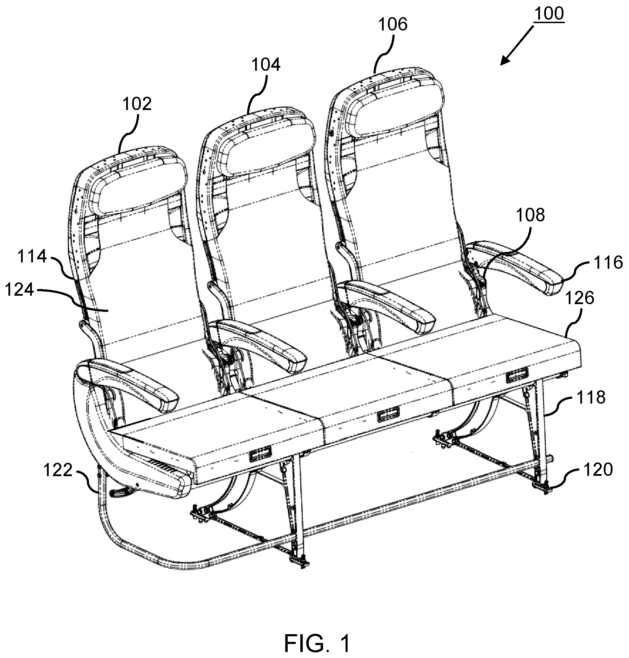

Referring to FIGS. 1-4, the passenger seat row 100 shown includes three laterally adjacent passenger seats 102, 104, 106 attached to a common frame 108. As used herein, the term "common" means shared and not ordinary, and common may mean at least one of the elements of the frame 108 is shared by at least two of the seats. The frame 108 generally includes spaced beam tubes 110 extending the length of the seat row, spreaders 112 positioned at the lateral extents of the seat row and between adjacent seats, backrest frames 114 pivotally attached to the spreaders or another frame element, and armrests 116 positioned at the lateral extents of the seat row and between adjacent seats. The armrests 116 are preferably configured to pivot between stowed and deployed positions to be stowed during boarding, deplaning, and when the seat row is configured for bed mode. The spreaders may form or be attached to legs 118 for attachment to the floor, such as by way of track fasteners 120. In some embodiments, the frame 108 includes a luggage retention bar 122.

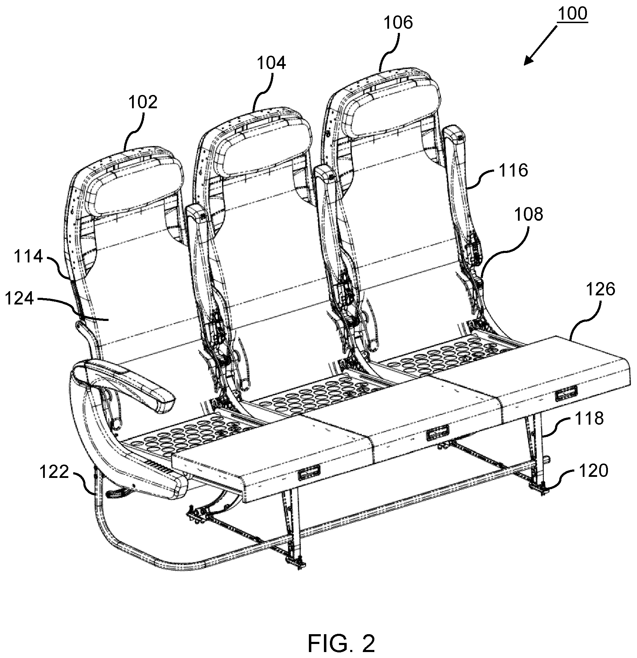

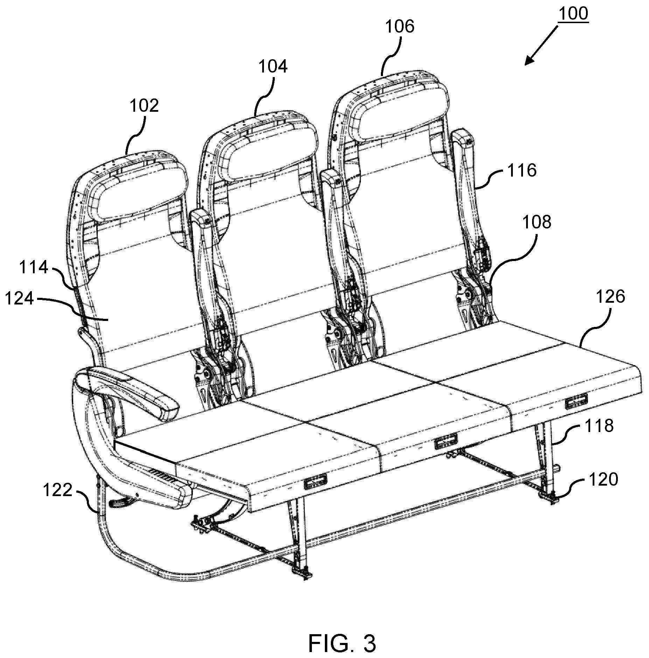

Each passenger seat 102, 104, 106 includes a backrest 124 and a seat pan assembly 126, also referred to herein as the seat pan. Each seat within the passenger seat row 100 is configurable, separately or together, between the upright sitting mode shown in FIG. 1 and the bed mode shown in FIG. 3 through an intermediate mode shown in FIG. 2. In the upright sitting or TTOL mode, the seat pan 126 is retracted to position the seat pan above the frame 108. In the bed mode, the seat pan 126 is extended to position the seat pan forward of the frame 108. The seat pan 126 may be inclined toward the forward end for cradling comfort and the seat pan translates between the retracted and extended conditions of the seat pan.

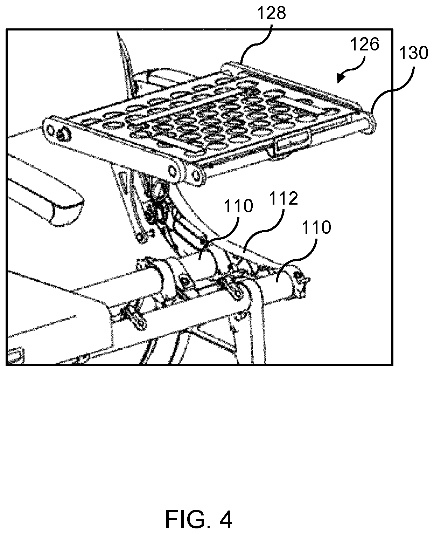

With specific reference to FIG. 4, the seat pan 126 attaches to the spaced beam tubes 110. As discussed in detail below, the seat pan 126 includes a fixed frame 128 that attaches to the beam tubes and a moving frame 130 that translates relative to the fixed frame, and more particularly, extends forward to achieve the in-flight bed mode and retracts to achieve the TTOL mode. The mechanism for attaching the fixed frame 128 to the beam tubes 110 is not limiting, so long as the fixed frame is maintained fixed relative to the seat frame.

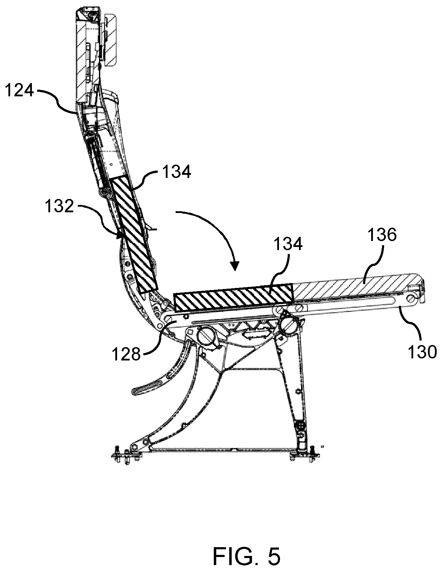

Referring to FIG. 5, a recess 132 is formed in a front of the backrest 124 and a cushion 134 is removably disposed in the recess 132. When in the TTOL mode, the cushion 134 is positioned in the recess and serves to support the lower back of the seat occupant. When in bed mode, the cushion 134 is removed from the recess 132 and positioned atop the fixed frame 128. In some embodiments, the length dimension of the cushion 134 is approximately equal to the maximum amount of forward travel of the moving frame 130 or is less than the maximum amount of forward travel. As such, when the moving frame 130 is extended to achieve bed mode, the cushion 134 is removed from the backrest and positioned atop the fixed frame 128 to form a continuous bed formed by the repositioned backrest cushion 134 and the seat pan cushion 136 translated forward with the moving frame 130. Thus, the cushion in the backrest is used to form part of the bed cushion. In some embodiments, the cushion 134 can be detached from the backrest and in other embodiments the cushion is pivotally attached to the backrest.

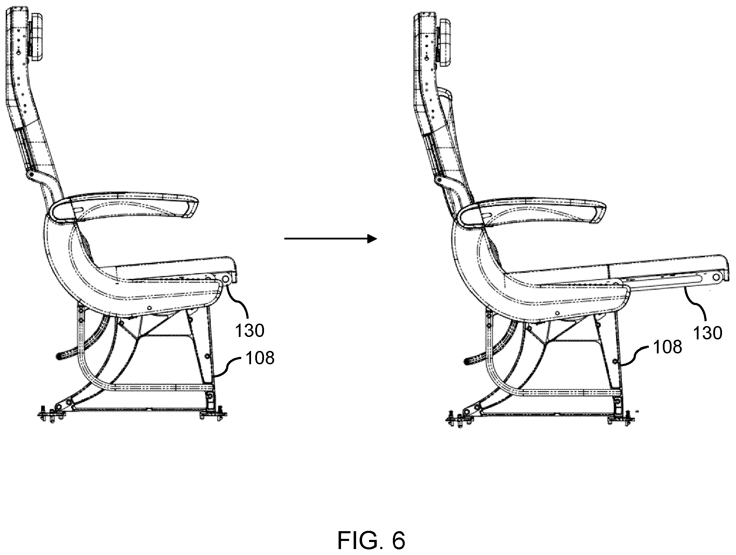

FIG. 6 shows the conversion from TTOL mode on the left to the bed mode on the right. When in the TTOL mode the moving frame 130 is positioned above the frame 108. When in the bed mode, the moving frame 130 is positioned forward of the frame 108, for instance cantilevered. The maximum forward travel of the moving frame 130 may be limited by the seat pitch and interference with a forward row or monument.

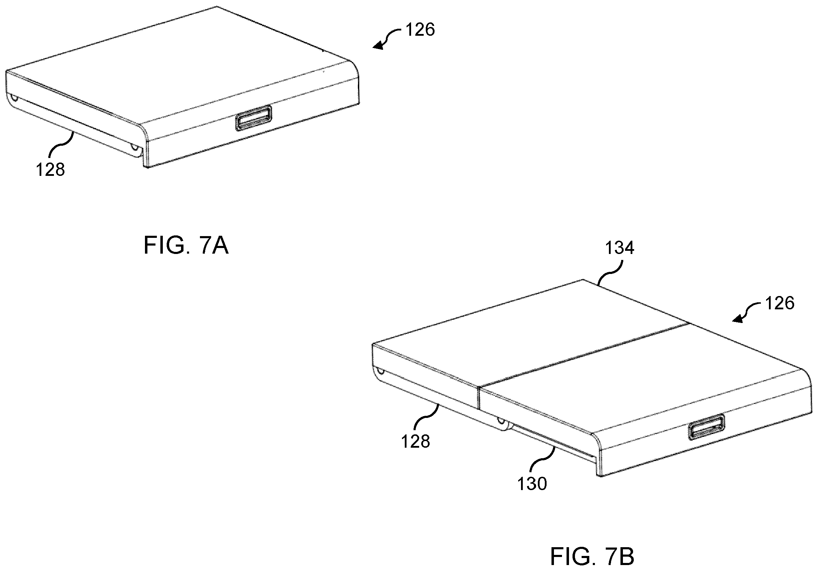

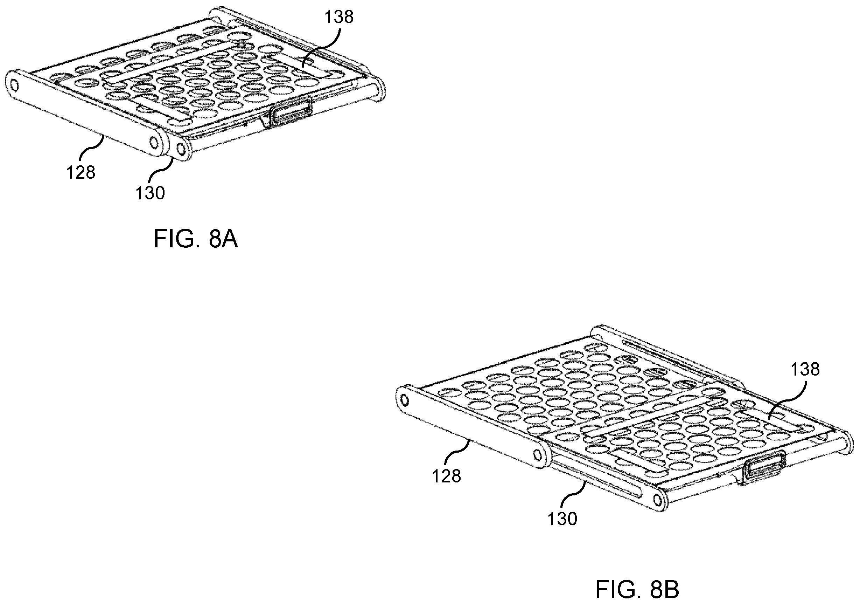

Referring to FIGS. 7A and 7B, the seat pan 126 includes the fixed frame 128 and the moving frame 130, and the removable backrest cushion 134 attached atop the fixed frame when the moving frame is moved forward to the extended condition shown in FIG. 7B. Referring to FIGS. 8A and 8B, the moving frame 130 translates horizontally or along its angle of inclination relative to the fixed frame 128. Fasteners 138, for instance hook and loop fasteners pairings, function to secure the cushions in place on their respective frame members. A hook and loop fastener pairing may also be used to maintain the cushion in the backrest recess.

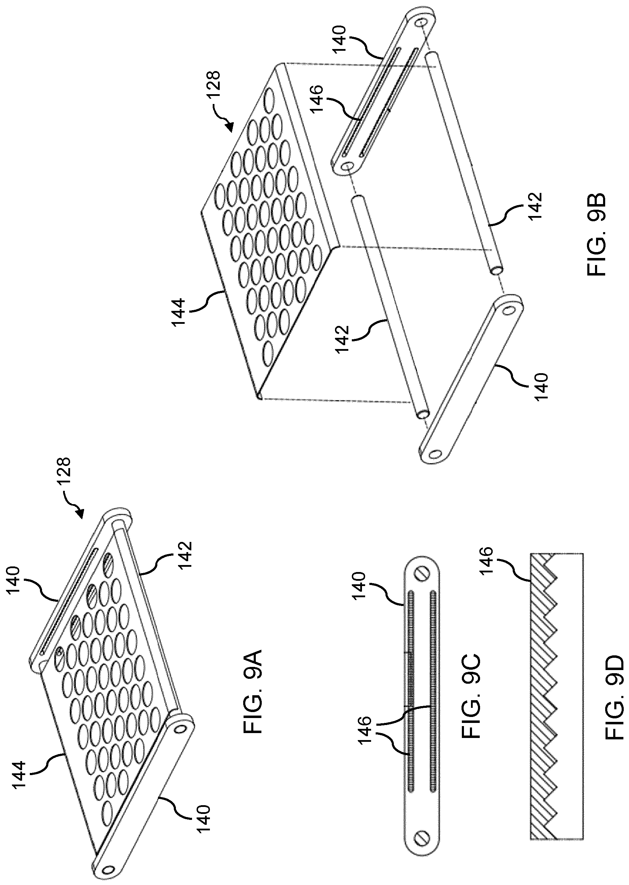

Referring to FIGS. 9A-9D, the fixed frame 128 includes spaced frame members 140 and interconnecting spaced beams 142. A foraminous plate 144 for weight savings, is attached atop the spaced beams 142. A rack 146 or racks are formed on the inboard side of at least one of the frame members 140 and serves to lock the position of the moving frame relative to the fixed frame 128. In some embodiments, the rack or racks allow for indexing of the moving frame at discrete positions and at predetermined intervals, for example 1-centimeter intervals, less than 1-centimeter intervals, and greater than 1-centimeter intervals.

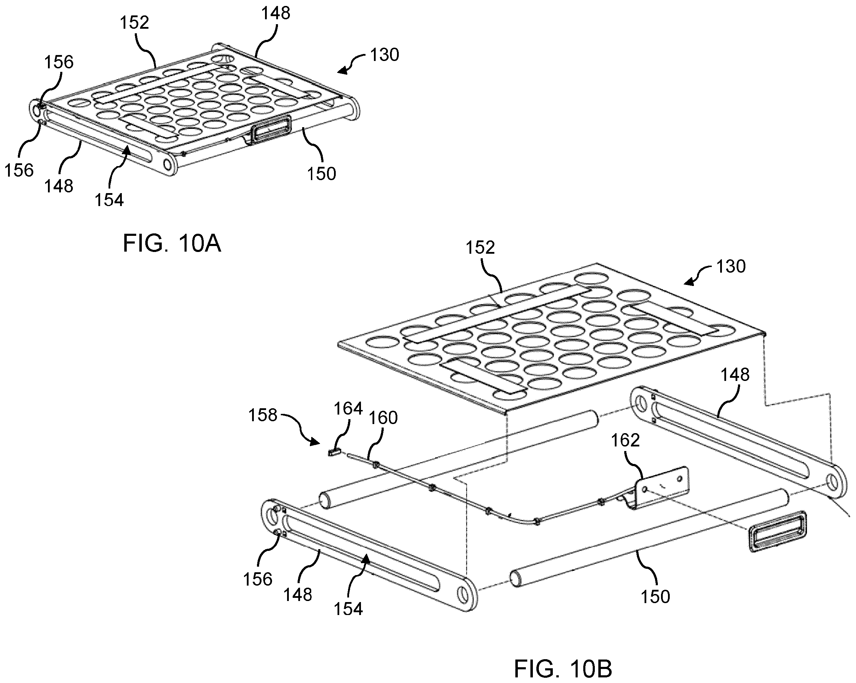

Referring to FIGS. 10A and 10B, the moving frame 130 includes spaced frame members 148, interconnecting spaced beams 150, and a plate 152 positioned atop and attached to the interconnecting spaced beams 150. Each of the spaced frame members 148 defines an elongate longitudinal slot 154 receiving one of the interconnecting spaced beams of the fixed frame, such as the forward beams. Bosses 156 formed on the outboard sides of the spaced frame members 148 travel along the racks formed on the inboard sides of the spaced frame members of fixed frame to guide translating motion and maintain squareness.

In some embodiments, each passenger seat is equipped with a locking mechanism for locking relative movement of the moving frame relative to the fixed frame. With continued reference to FIGS. 10A and 10B, the locking mechanism 158 generally includes a Bowden cable 160 coupled at one end to a lever 162 and coupled at an opposing end to a biased lock 164. The lock 164 interacts with the rack, for instance having a shape complimentary with the rack to engage therewith. The lever 162 is positioned at the forward end of the moving frame 130 to be accessible to the user. The locking mechanism 158 is carried by the moving frame 130 considering the moving frame moves and the fixed frame remains stationary. In use, actuating (e.g., pulling) the lever 162 translates an inner cable relative to an outer cable of the Bowden cable, thereby pulling the lock 164 to disengage the lock from the rack. When the lever is released, the inner cable translates relative to the outer cable in the opposite direction to reengage the lock 164 with the rack. To move the moving frame 130 relative to the fixed frame, the lever remains actuated until the moving frame is in the desired frame and then the lever is released.

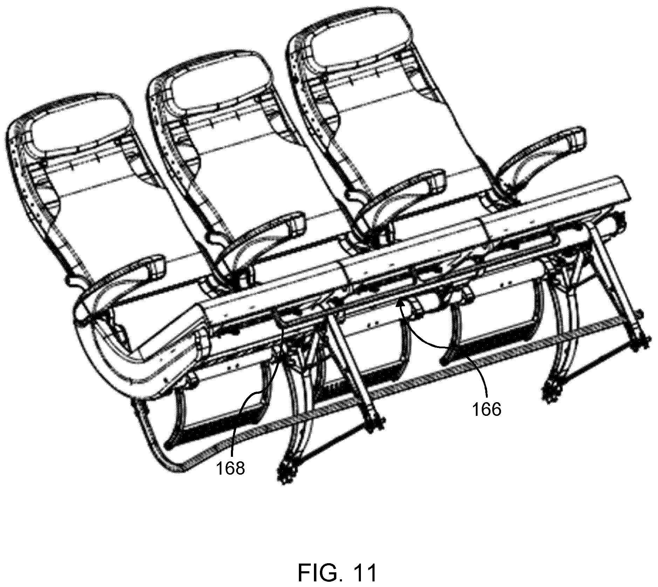

Referring to FIG. 11, whereas the locking mechanism shown in FIGS. 10A and 10B is associated with each passenger seat, the locking mechanism 166 shown in FIG. 11 includes a singular lever 168 operable for actuating all locks in the same row simultaneously. In some embodiment, the singular lever 168 is an elongate handle positioned below the forward end of the seat pans and is coupled to multiple Bowden cables each coupled to a lock engaging its respective rack. In use, the singular lever 168 is actuated to pull the plurality of internal cables to release the moving frames from their locked positions. To retract the moving frames, i.e., return the moving frame toward their TTOL positions, the singular lever 168 is pulled, the moving frames are pushed toward their retracted positions, and the lever released to lock the moving frames in place. Other locking mechanisms are possible and envisioned including electronic actuators which may be passenger or crew controlled, and in some cases networked to be controllable in preparation for a flight condition.

While the foregoing description provides embodiments of the invention by way of example only, it is envisioned that other embodiments may perform similar functions and/or achieve similar results. Any and all such embodiments and examples are within the scope of the present invention as long as they fall within the scope of the appended claims.

## Claims

1. A passenger seat row; comprising:
a common frame (108);
at least two passenger seats (102, 104, 106) attached to the common frame (108), each of the at least two passenger seats comprising:
a backrest (124) forming a recess (132) on a front of the backrest;
a cushion (134) removably disposed in the recess; and
a seat pan (126) including a fixed frame (128) and a moving frame (130) movably coupled to the fixed frame;
wherein in a taxi, takeoff and landing, TTOL, mode of the passenger seat row, the moving frame of each of the at least two passenger seats is retracted relative to the moving frame's respective fixed frame and the cushion is disposed in the recess; and
wherein in a bed mode of the passenger seat row, the moving frame of each of the at least two passenger seats is extended relative to the moving frame's respective fixed frame and the cushion is positioned atop its respective fixed frame;
**characterised in that**:
the fixed frame (128) comprises spaced frame members (140) interconnected by spaced beams (142) and a foraminous plate attached atop the spaced beams, at least one of the spaced frame members defining a rack (146) on an inboard side thereof; and
the moving frame (130) comprises spaced frame members (148) interconnected by spaced beams (150) and a foraminous plate attached atop the spaced beams, each of the spaced frame members defining an elongate slot (154);
wherein a forward beam of the spaced beams (142) of the fixed frame (128) is disposed in the elongate slot (154) of each of the spaced frame members (148) of the moving frame (130) for guiding movement of the moving frame (130) relative to the fixed frame (128).

2. The passenger seat row according to claim 1, wherein a length dimension of the cushion (134) is substantially equal to an amount of travel of the moving frame (130) relative to the fixed frame (128).

3. The passenger seat row according to claim 1 or 2, wherein the moving frame (130) translates relative to the fixed frame (128) as the moving frame extends and retracts.

4. The passenger seat row according to any preceding claim, further comprising a locking mechanism (166) associated with each of the at least two passenger seats (102, 104, 106) for locking relative motion between the moving frame (130) and the fixed frame (128).

5. The passenger seat row according to claim 4, wherein the locking mechanism (166) comprises:
a lock (164) configured to interact with the rack on at least one of the frame members (140) of the fixed frame (128) to lock a position of the moving frame (130) relative to the fixed frame;
a lever (168) positioned on the moving frame; and
a Bowden cable (160) coupled to each of the lock and the lever, wherein in use, pulling the lever causes an inner cable of the Bowden cable to disengage the lock from the rack to permit movement of the moving frame relative to the fixed frame.

6. The passenger seat row according to any preceding claim, further comprising hook and look fasteners positioned in the recess (132), on a bottom side of the cushion (134), and atop the foraminous plate of at least one of the fixed frame (128) and the moving frame (130), wherein in use, the hook and loop fasteners secure the cushion in the recess and atop at least one of the fixed frame and the moving frame.

7. The passenger seat row according to any preceding claim, wherein:
when in the TTOL mode, the moving frame (130) is positioned above the common frame (108); and
when in the bed mode, the moving frame is positioned forward of the common frame.

8. The passenger seat row according to any preceding claim, wherein the common frame (108) comprises:
spaced beam tubes (110) supporting the fixed frame (128) of the at least two passenger seats (102, 104, 106);
spreaders (112) forming legs (118) for attachment to a floor; and
at least one armrest (116).

9. The passenger seat row according to any preceding claim, comprising at least three passenger seats (102, 104, 106).

10. The passenger seat row according to any of claims 5 to 9, wherein the lever (162) is positioned at a forward end of the moving frame.

## Patentansprüche

1. Fahrgastsitzreihe, umfassend:
einen gemeinsamen Rahmen (108);
mindestens zwei an dem gemeinsamen Rahmen (108) angebrachte Fahrgastsitze (102, 104, 106), wobei jeder der mindestens zwei Fahrgastsitze Folgendes umfasst:
eine Rückenlehne (124), die an einer Vorderseite der Rückenlehne eine Vertiefung (132) bildet;
ein Polster (134), das entfernbar in der Vertiefung angeordnet ist; und
eine Sitzschale (126), die einen unbeweglichen Rahmen (128) und einen beweglich an den unbeweglichen Rahmen gekoppelten beweglichen Rahmen (130) beinhaltet;
wobei der bewegliche Rahmen jedes der mindestens zwei Fahrgastsitze in einem Roll-, Start- und Landemodus, TTOL, der Fahrgastsitzreihe relativ zu dem jeweiligen unbeweglichen Rahmen des beweglichen Rahmens eingefahren ist und das Polster in der Vertiefung angeordnet ist; und
wobei der bewegliche Rahmen jedes der mindestens zwei Fahrgastsitze in einem Bettmodus der Fahrgastsitzreihe relativ zu dem jeweiligen unbeweglichen Rahmen des beweglichen Rahmens ausgefahren ist und das Polster oben auf seinem jeweiligen unbeweglichen Rahmen positioniert ist;
**dadurch gekennzeichnet, dass**:
der unbewegliche Rahmen (128) durch beabstandete Träger (142) miteinander verbundene beabstandete Rahmenelemente (140) und eine auf den beabstandeten Trägern angebrachte Lochplatte umfasst, wobei mindestens eines der beabstandeten Rahmenelemente an der Innenseite davon eine Zahnstange (146) definiert; und
der bewegliche Rahmen (130) durch beabstandete Träger (150) miteinander verbundene beabstandete Rahmenelemente (148) und eine auf den beabstandeten Trägern angebrachte Lochplatte umfasst, wobei jedes der beabstandeten Rahmenelemente einen Längsschlitz (154) definiert;
wobei ein vorderer Träger der beabstandeten Träger (142) des unbeweglichen Rahmens (128) zum Führen einer Bewegung des beweglichen Rahmens (130) relativ zu dem unbeweglichen Rahmen (128) in dem Längsschlitz (154) jedes der beabstandeten Rahmenelemente (148) des beweglichen Rahmens (130) angeordnet ist.

2. Fahrgastsitzreihe nach Anspruch 1, wobei eine Längenabmessung des Polsters (134) im Wesentlichen gleich einem Bewegungsbetrag des beweglichen Rahmens (130) relativ zu dem unbeweglichen Rahmen (128) ist.

3. Fahrgastsitzreihe nach Anspruch 1 oder 2, wobei sich der bewegliche Rahmen (130) beim Ausfahren und Einfahren relativ zu dem unbeweglichen Rahmen (128) verschiebt.

4. Fahrgastsitzreihe nach einem der vorhergehenden Ansprüche, ferner umfassend einen jedem der mindestens zwei Fahrgastsitze (102, 104, 106) zugeordneten Sperrmechanismus (166) zum Sperren der relativen Bewegung zwischen dem beweglichen Rahmen (130) und dem unbeweglichen Rahmen (128).

5. Fahrgastsitzreihe nach Anspruch 4, wobei der Sperrmechanismus (166) Folgendes umfasst:
eine Sperre (164), die zum Zusammenwirken mit der Zahnstange an mindestens einem der Rahmenelemente (140) des unbeweglichen Rahmens (128) zum Sperren einer Position des beweglichen Rahmens (130) relativ zu dem unbeweglichen Rahmen konfiguriert ist;
einen Hebel (168), der auf dem beweglichen Rahmen positioniert ist; und
einen Bowdenzug (160), der an jedes von der Sperre und dem Hebel gekoppelt ist, wobei ein Ziehen des Hebels während der Verwendung ein Innenkabel des Bowdenzugs zum Lösen der Sperre von der Zahnstange veranlasst, um eine Bewegung des beweglichen Rahmens relativ zu dem unbeweglichen Rahmen zuzulassen.

6. Fahrgastsitzreihe nach einem der vorhergehenden Ansprüche, ferner umfassend Klettverschlüsse, die in der Vertiefung (132), auf einer Unterseite des Polsters (134) und oben auf der Lochplatte von mindestens einem von dem unbeweglichen Rahmen (128) und dem beweglichen Rahmen (130) positioniert sind, wobei die Klettverschlüsse während der Verwendung das Polster in der Vertiefung und oben auf mindestens einem von dem unbeweglichen Rahmen und dem beweglichen Rahmen sichern.

7. Fahrgastsitzreihe nach einem der vorhergehenden Ansprüche, wobei:
der bewegliche Rahmen (130) in dem TTOL-Modus über dem gemeinsamen Rahmen (108) positioniert ist; und
der bewegliche Rahmen in dem Bettmodus vor dem gemeinsamen Rahmen positioniert ist.

8. Fahrgastsitzreihe nach einem der vorhergehenden Ansprüche, wobei der gemeinsame Rahmen (108) Folgendes umfasst:
beabstandete Trägerrohre (110), die den unbeweglichen Rahmen (128) der mindestens zwei Fahrgastsitze (102, 104, 106) tragen;
Spreizer (112), die Schenkel (118) zur Befestigung an einem Boden bilden; und
mindestens eine Armlehne (116).

9. Fahrgastsitzreihe nach einem der vorhergehenden Ansprüche, umfassend mindestens drei Fahrgastsitze (102, 104, 106).

10. Fahrgastsitzreihe nach einem der Ansprüche 5 bis 9, wobei der Hebel (162) an einem vorderen Ende des beweglichen Rahmens positioniert ist.

## Revendications

1. Rangée de sièges passagers comprenant :
un cadre commun (108) ;
au moins deux sièges passagers (102, 104, 106) fixés au cadre commun (108), chacun des au moins deux sièges passagers comprenant :
un dossier (124) formant un évidement (132) sur un avant du dossier ;
un coussin (134) disposé de manière amovible dans l'évidement ; et
une assise (126) comportant un cadre fixe (128) et un cadre mobile (130) couplé de manière mobile au cadre fixe ;
dans laquelle, dans un mode de roulage, de décollage et d'atterrissage TTOL de la rangée de sièges passagers, le cadre mobile de chacun des au moins deux sièges passagers est rétracté par rapport au cadre fixe respectif du cadre mobile et le coussin est disposé dans l'évidement ; et
dans laquelle, dans un mode lit de la rangée de sièges passagers, le cadre mobile de chacun des au moins deux sièges passagers est prolongé par rapport au cadre fixe respectif du cadre mobile et le coussin est positionné au-dessus de son cadre fixe respectif ;
**caractérisée en ce que** :
le cadre fixe (128) comprend des éléments de cadre espacés (140) interconnectés par des profilés espacés (142) et une plaque perforée fixée au sommet des profilés espacés, au moins l'un des éléments de cadre espacés définissant une crémaillère (146) sur un côté intérieur de celui-ci ; et
le cadre mobile (130) comprend des éléments de cadre espacés (148) interconnectés par des profilés espacés (150) et une plaque perforée fixée au sommet des profilés espacés, chacun des éléments de cadre espacés définissant une fente allongée (154) ;
dans laquelle un profilé avant des profilés espacés (142) du cadre fixe (128) est disposé dans la fente allongée (154) de chacun des éléments de cadre espacés (148) du cadre mobile (130) pour guider le mouvement du cadre mobile (130) par rapport au cadre fixe (128).

2. Rangée de sièges passagers selon la revendication 1, dans laquelle une dimension de longueur du coussin (134) est sensiblement égale à une quantité de mouvement du cadre mobile (130) par rapport au cadre fixe (128).

3. Rangée de sièges passagers selon la revendication 1 ou 2, dans laquelle le cadre mobile (130) se déplace par rapport au cadre fixe (128) lorsque le cadre mobile se prolonge et se rétracte.

4. Rangée de sièges passagers selon une quelconque revendication précédente, comprenant également un mécanisme de verrouillage (166) associé à chacun des au moins deux sièges passagers (102, 104, 106) pour verrouiller le mouvement relatif entre le cadre mobile (130) et le cadre fixe (128).

5. Rangée de sièges passagers selon la revendication 4, dans laquelle le mécanisme de verrouillage (166) comprend :
un verrou (164) configuré pour interagir avec la crémaillère sur au moins l'un des éléments de cadre (140) du cadre fixe (128) pour verrouiller une position du cadre mobile (130) par rapport au cadre fixe ;
un levier (168) positionné sur le cadre mobile ; et
un câble Bowden (160) couplé à chacun du verrou et du levier, dans laquelle, lors de l'utilisation, tirer le levier amène un câble intérieur du câble Bowden à désengager le verrou de la crémaillère pour permettre le mouvement du cadre mobile par rapport au cadre fixe.

6. Rangée de sièges passagers selon une quelconque revendication précédente, comprenant également des attaches autoagrippantes positionnées dans l'évidement (132), sur un côté inférieur du coussin (134), et au-dessus de la plaque perforée d'au moins l'un du cadre fixe (128) et du cadre mobile (130), dans laquelle, lors de l'utilisation, les attaches autoagrippantes fixent le coussin dans l'évidement et au-dessus d'au moins l'un du cadre fixe et du cadre mobile.

7. Rangée de sièges passagers selon une quelconque revendication précédente, dans laquelle :
en mode TTOL, le cadre mobile (130) est positionné au-dessus du cadre commun (108) ; et
en mode lit, le cadre mobile est positionné en avant du cadre commun.

8. Rangée de sièges passagers selon une quelconque revendication précédente, dans laquelle le cadre commun (108) comprend :
des tubes de profilé espacés (110) supportant le cadre fixe (128) des au moins deux sièges passagers (102, 104, 106) ;
des écarteurs (112) formant des pieds (118) pour la fixation à un plancher ; et
au moins un accoudoir (116).

9. Rangée de sièges passagers selon une quelconque revendication précédente, comprenant au moins trois sièges passagers (102, 104, 106).

10. Rangée de sièges passagers selon l'une quelconque des revendications 5 à 9, dans laquelle le levier (162) est positionné à une extrémité avant du cadre mobile.
